# EUROPEAN PATENT APPLICATION

(11) **EP 3 962 193 A1**
(43) Date of publication of application: **02.03.2022**
(21) Application number: 19925600.9
(22) Date of filing: 26.04.2019
(51) Int. Cl.: H04W 72/04, H04W 92/20

(54) **WIRELESS COMMUNICATION NODE**

(71) Applicant: NTT DOCOMO, INC., Chiyoda-Ku Tokyo 100-6150 (JP)
(72) Inventor: KURITA, Daisuke, Tokyo 100-6150 (JP); HARADA, Hiroki, Tokyo 100-6150 (JP)
(74) Representative: Hoffmann Eitle
(86) International application number: PCT/JP2019/018155
(87) International publication number: WO 2020/217534

(57) **Abstract**

A first radio link is configured between a radio communication node (100A) and another radio communication node (100B), and a second radio link is configured between the another radio communication node (100B) and a second radio node that is a child node. The radio communication node (100A) acquires a radio resource configuration for the second radio node in the radio communication node (100B).

## Description

### TECHNICAL FIELD

The present invention relates to a radio communication node that is capable of configuration a radio access and a radio backhaul.

### BACKGROUND ART

The 3rd Generation Partnership Project (3GPP) specifies Long Term Evolution (LTE), and with the aim of further speeding, specifies LTE-Advanced (hereinbelow, the LTE includes the LTE-Advanced), further, a succeeding system of the LTE called 5G New Radio (NR) or Next Generation (NG) and the like is being specified.

For example, in a radio access network (RAN) of the NR, an Integrated Access and a Backhaul (IAB) in which a radio access to a user equipment (User Equipment, UE) and a radio backhaul configured between radio communication nodes such as radio base stations (gNBs) are integrated is being studied.

In the IAB, a radio communication node (IAB node) includes Mobile Termination (MT) function for connecting to a parent node, and a Distributed Unit (DU) function for connecting to a child node or the UE.

Moreover, in the IAB, even if there is a restriction of half duplex communication, radio resources shared based on time division multiplexing (TDM), frequency division multiplexing (FDM), and space division multiplexing (SDM) are available via the radio access and the radio backhaul. Among such resources, from the DU's perspective, downlink (DL), uplink (UL), and Flexible time-resource (D/U/F) are either hard resources, soft resources, or Non Available (H/S/NA).

Specifically, the "hard" radio resource is a radio resource that is always available for a DU child link via which a corresponding time resource is connected to a child node or the UE, and the "soft" radio resource is a radio resource (DU resource) in which the availability thereof for the DU child link of the corresponding time resource is explicitly or implicitly controlled by the parent node.

In the 3GPP, a radio resource control method for MTs and DUs that use such half-duplex communication is being discussed (see Non-Patent Document 1).

As a result of the discussion, it has been agreed upon that the DU resource of the IAB node is configured to hard or soft (available), and that when a cell-specific signal or channel is allocated to the MT, the IAB node selects whether to use the DU or the MT.

### PRIOR ART DOCUMENT

### NON-PATENT DOCUMENT

Non-Patent Document 1: "Summary of 7.2.3.3 Mechanisms for resource multiplexing among backhaul and access links", R1-1905739, 3GPP TSG RAN WG1 Meeting #96bis, 3GPP, April 2019

### SUMMARY OF THE INVENTION

However, the contents of the agreement as explained above are considered to have the following problems. Specifically, when determining a radio resource to be allocated only based on H / S / NA / D / U / F explained above, even if a parent node allocates the radio resource to DU of the parent node, there is a possibility that the IAB node does not select a link with the parent node (Link_parent) . In such a case, the allocated radio resource gets wasted.

Therefore, the present invention has been made in view of the above circumstances. One object of the present invention is to provide a radio communication node capable of realizing a more appropriate allocation of radio resources in an Integrated Access and Backhaul (IAB) configuration.

According to one aspect of the present invention a radio communication node (radio communication node 100A), in which a first radio link (Link_parent) is configured between the radio communication node and a first radio node (IAB node), and a second radio link (Link_child) is configured between the first radio node and a second radio node, includes a controlling unit (controlling unit 150) that acquires configuration of a radio resource for the second radio node in the first radio node.

### BRIEF DESCRIPTION OF DRAWINGS

FIG. 1 is an overall structural diagram of a radio communication system 10.
FIG. 2 shows a basic configuration example of IAB.
FIG. 3 is a functional block diagram of a radio communication node 100A that constitutes a parent node.
FIG. 4 is a functional block diagram of CU 50.
FIG. 5 is a diagram showing an example of allocation of MT and DU resources to the parent node and an IAB node.
FIG. 6 is a diagram showing a sequence of processes performed to allocate the DU resource to the parent node (Operation Example 1).
FIG. 7 is a diagram showing a sequence of processes performed to allocate the DU resource to the parent node (Operation Example 2).
FIG. 8 is a diagram showing an example of hardware configuration of the CU 50 and the radio communication nodes 100A, 100B, and 100C.

### MODES FOR CARRYING OUT THE INVENTION

Exemplary embodiments of the present invention are explained below with reference to the accompanying drawings. Note that, the same or similar reference numerals have been attached to the same functions and configurations, and the description thereof is appropriately omitted.

### (1) Overall Structural Configuration of Radio Communication System

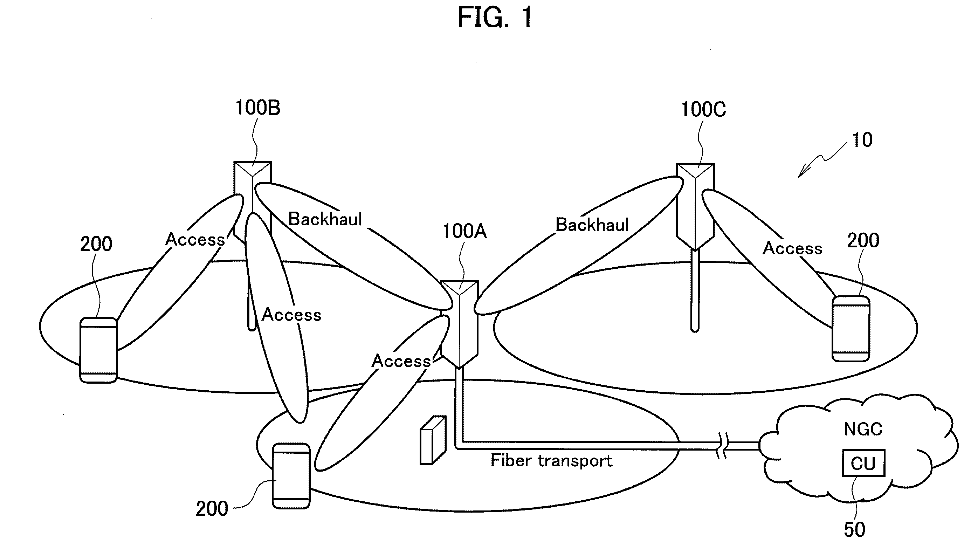

FIG. 1 is an overall structural diagram of a radio communication system 10 according to the present embodiment. The radio communication system 10 is a radio communication system using 5G New Radio (NR), and is constituted by a plurality of radio communication nodes and a user equipment.

Specifically, the radio communication system 10 includes radio communication nodes 100A, 100B, and 100C, and a user equipment 200 (hereinafter, "UE 200").

The radio communication nodes 100A, 100B, and 100C are capable of configuration a radio access with the UE 200 and a radio backhaul between the radio communication nodes. Specifically, a backhaul using a radio link (transmission path) is configured between the radio communication node 100A and the radio communication node 100B, and between the radio communication node 100A and the radio communication node 100C.

Accordingly, a configuration in which the radio access to the UE 200 and the radio backhaul between the radio communication nodes are integrated is called Integrated Access and Backhaul (IAB).

In the IAB, the existing functions and interfaces defined for the radio access are reused. Particularly, the Mobile-Termination (MT), gNB-DU (Distributed Unit), gNB-CU (Central Unit), User Plane Function (UPF), Access and Mobility Management Function (AMF), and a Session Management Function (SMF), along with their corresponding interfaces, for example, NR Uu (between MT and gNB / DU), F1, NG, X2, and N4 are used as a baseline.

The radio communication node 100A is connected to a Next Generation Core (NGC) that is a core network of the NR via a wired transmission path such as fiber transport. The NGC (also NG-RAN) includes a Central Unit 50 (hereinafter, CU 50) that is a communication node. The CU 50 can be configured by any one of the UPF, the AMF, and the SMF explained above or combination thereof.

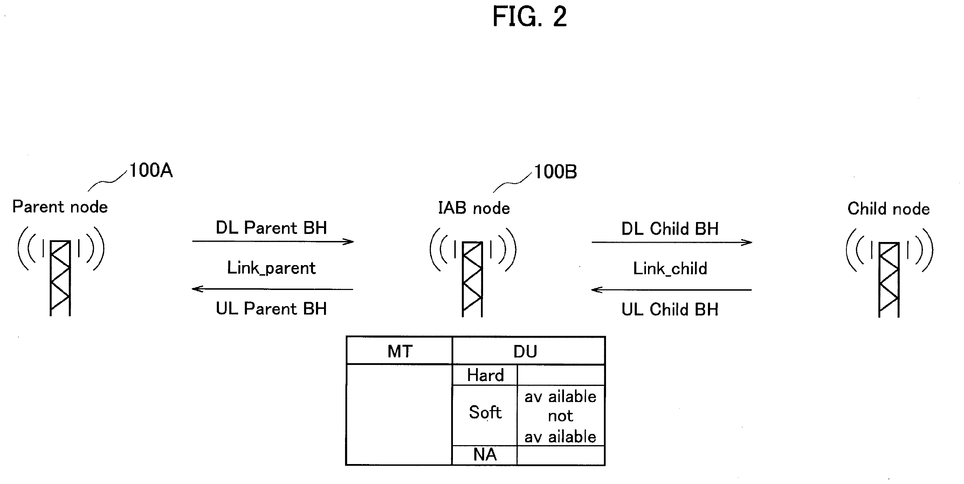

FIG. 2 shows a basic configuration example of the IAB. As shown in FIG. 2, in the present embodiment, the radio communication node 100A constitutes a parent node in the IAB, and the radio communication node 100B (and radio communication node 100C) constitutes the IAB node (first radio node) in the IAB.

The child node (second radio node) in the IAB is constituted by not shown other radio communication nodes. Alternatively, the child node can be constituted by the UE 200.

A radio link (first radio link) is configured between the parent node and the IAB node. Specifically, a radio link called Link_parent is configured.

A radio link (second radio link) is configured between the IAB node and the child node. Specifically, a radio link called Link_child is configured.

Such radio links configured between the radio communication nodes are called radio backhauls (BH). The Link_parent is constituted by a downlink DL Parent BH and an uplink UL Parent BH. The Link_child is constituted by a downlink DL Child BH and an uplink UL Child BH.

The IAB node includes a Mobile Termination (MT) function for connecting to the parent node and a distributed unit (DU) function for connecting to the child node (or the UE 200). Although not shown in FIG. 2, the parent node and the child node, too, include the MT and the DU.

Radio resources used by the DU are categorized into any of hard, soft, or Not Available (H / S / NA) types. Moreover, the soft (S) resources are further defined as "available" or "not available".

The configuration example of the IAB shown in FIG. 2 uses CU / DU division; however, the IAB configuration need not necessarily be limited to such a configuration. For example, in the radio backhaul, the IAB can be constituted by a tunneling that uses GPRS Tunneling Protocol (GTP)-U / User Datagram Protocol (UDP) / Internet Protocol (IP).

The main advantage of such IAB configuration is that NR cells can be flexibly and densely arranged without increasing the density of the transport network. The IAB can be applied to various scenarios, such as arrangement of small cell outdoors, and support for indoor and mobile relays (for example, in buses and trains).

Even if the radio resource used for the radio access and the radio backhaul are limited to half-duplex communication, the time division multiplexing (TDM), the frequency division multiplexing (FDM), and the space division multiplexing (SDM) can be used. However, the radio resource need not necessarily be limited to half-duplex communication and can use full-duplex communication as long as other requirements are satisfied.

Moreover, as shown in FIGS. 1 and 2, the IAB can support deployment in a standalone (SA) mode of NR only or a non-standalone (NSA) mode that includes other RATs (LTE and the like).

### (2) Functional Block Configuration of Radio Communication System

A functional block configuration of the radio communication nodes 100A and CU 50 included in NGC that constitute the radio communication system 10 will be explained below.

### (2.1) Radio communication node 100A

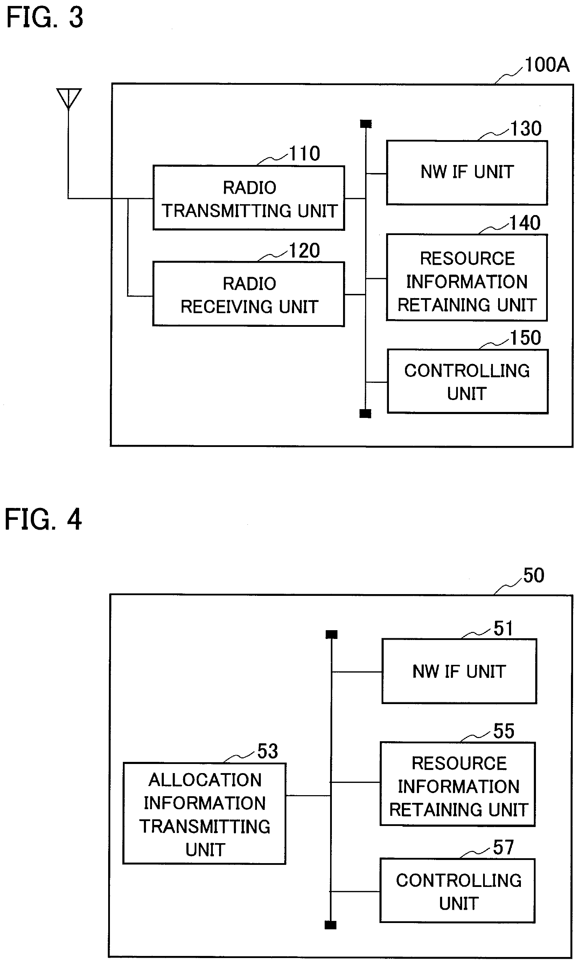

FIG. 3 is a functional block diagram of the radio communication node 100A that constitutes the parent node. As shown in FIG. 3, the radio communication node 100A includes a radio transmitting unit 110, a radio receiving unit 120, NW IF unit 130, a resource information retaining unit 140, and a controlling unit 150.

The radio transmitting unit 110 transmits a radio signal in accordance with the 5G specifications. Moreover, the radio receiving unit 120 transmits the radio signal in accordance with the 5G specifications. In the present embodiment, the radio transmitting unit 110 and the radio receiving unit 120 perform radio communication with the radio communication node 100B that constitutes the IAB node.

In the present embodiment, the radio communication node 100A includes functions of the MT and the DU, and the radio transmitting unit 110 and the radio receiving unit 120, too, transmit and receive radio signals for the MT and the DU.

The NW IF unit 130 provides a communication interface that realizes connection with the NGC side and the like. For example, the NW IF unit 130 can include interfaces such as X2, Xn, N2, and N3.

The resource information retaining unit 140 retains information on radio resources that are allocated to the parent node and the IAB node. Specifically, it is desirable that the resource information retaining unit 140 retains the following configuration information about at least the radio resources for DU (DU resources) of IAB node.

- DU resources (specifically, H / S / NA type)
- Information on allocation of the cell specific signal or channel in the IAB nodes explained below:
   (i) SS / PBCH Block (SSB) transmissions
   (ii) Broadcast system information
   (iii) Configured periodic CSI-RS (Channel State Information Reference Signal)
   (iv) PRACH (Physical Random Access Channel) resources
   (v) Resources for scheduling requests

Because the IAB node configuration information that includes the allocation information mentioned in points (i) to (v) is selected in the IAB node, the parent node acquires the configuration information configured in the IAB node. Furthermore, it is desirable that the resource information retaining unit 140 acquires all allocation information mentioned in points (i) to (v); however, part of the allocation information need not be acquired, and can be replaced by other information if it is possible to replace such information with other information.

The SS / PBCH Block (SSB) is a synchronizing signal / broadcast channel block that is constituted by SS and PBCH, and is mainly transmitted periodically to detect a cell ID and reception timing when a terminal starts communication. The SSB is also used to measure the reception quality of each cell in the 5G (NR).

The Broadcast system information can be any SIB (System Information Block) or a specific SIB. Alternatively, the information may be notification information other than SIB.

The CSI indicates the state of a radio channel via which a signal passes, and the CSI-RS is a reference signal used for acquiring the information.

The PRACH is a physical channel that the UE 200 initially transmits in the random access procedure. A scheduling request (SR: Scheduling Request) is a signal via which a user requests a radio base station (including the IAB node) for uplink radio resource allocation.

The controlling unit 150 controls various functional blocks that constitute the radio communication node 100A. Specifically, in the present embodiment, the controlling unit 150 acquires configurations of the radio resource for the child node (second radio node) in the IAB node (first radio node).

In the present embodiment, the controlling unit 150 acquires from the radio communication node 100B that constitutes the IAB node the configuration of the radio resource (DU resource) for the child node (another radio communication node) in the radio communication node 100B.

Specifically, the controlling unit 150 can acquire from the IAB node the configuration information that indicates the configurations of the radio resources (as explained above) . Alternatively, the controlling unit 150 can acquire from the core network, specifically, from the CU 50 the configuration information that indicates the configurations of the radio resources.

Accordingly, the radio communication node 100A (parent node) can acquire the configuration information that indicates the configurations of the DU resource of the IAB node and retain the information in the resource information retaining unit 140.

### (2.2) CU 50

FIG. 4 is a functional block diagram of the CU 50. As shown in FIG. 4, the CU 50 includes NW IF unit 51, an allocation information transmitting unit 53, a resource information retaining unit 55, and a controlling unit 57.

The NW IF unit 51 provides a communication interface that realizes connection with the radio communication node 100A and the like. For example, the NW IF unit 51 can include interfaces such as N2 and N3.

The allocation information transmitting unit 53 transmits information of the radio resource allocated to the parent node and the IAB node, based on an instruction from the controlling unit 57. Specifically, the allocation information transmitting unit 53 transmits toward the radio communication node 100A the allocation information of the MT and DU resources that are allocated to the radio communication node 100A that constitutes the parent node.

Moreover, the allocation information transmitting unit 53 transmits toward the radio communication node 100B the allocation information of the MT and DU resources that are allocated to the radio communication node 100B that constitutes the IAB node.

The resource information retaining unit 55 retains the allocation information of the MT and the DU resources that is transmitted by the allocation information transmitting unit 53. Specifically, the resource information retaining unit 55 retains the allocation information of the MT and the DU resources that are allocated to the parent node and the IAB node. The retained allocation information is appropriately updated.

The controlling unit 57 controls various functional blocks that constitute the CU 50. Particularly, in the present embodiment, the controlling unit 57 executes control relating to the radio resources that are allocated to the parent node and the IAB node.

Specifically, the controlling unit 57 controls the MT and the DU resources allocated to the parent node and the IAB node, and causes the allocation information transmitting unit 53 to transmit the allocation information of the MT and the DU resources.

### (3) Operation of Radio Communication System

Operation of the radio communication system 10 is explained below. Specifically, an operation related to the allocation of the MT and the DU resources to the parent node and the IAB node will be explained.

### (3.1) Example of allocation of MT and DU resources to parent node and IAB node

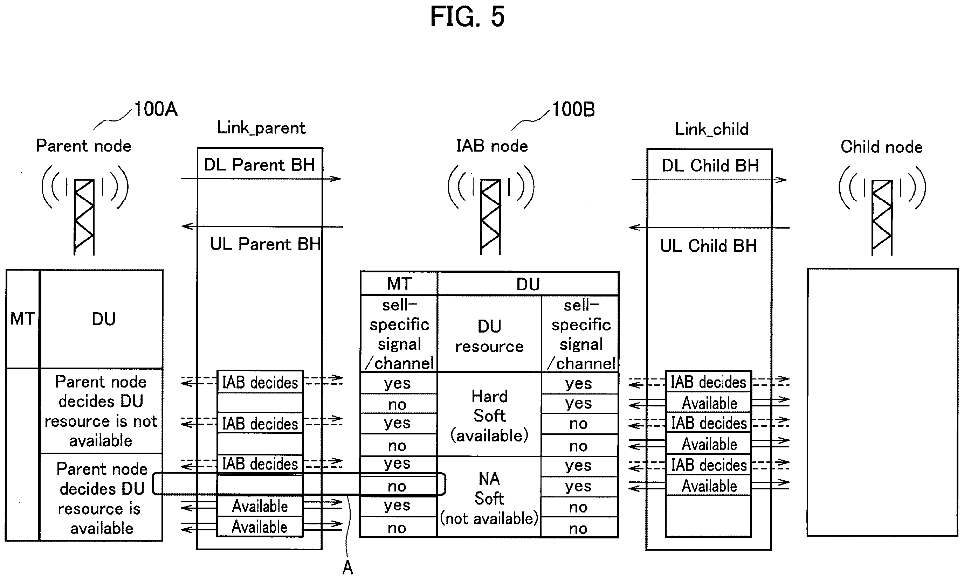

FIG. 5 shows an example of allocation of the MT and the DU resources to the parent node and the IAB node. In FIG. 5, the Link_parent is configured between the parent node (radio communication node 100A) and the IAB node (radio communication node 100B), and the Link_child (can be referred to as DU child link) is configured between the IAB node and the child node.

Specifically, the Link_parent is configured between the DU of the parent node and the MT of the IAB node. Moreover, the Link_child is configured between the DU of the IAB node and a not-shown MT of the child node.

As explained above, the DU resources are categorized into H / S / NA types, and the soft (S) is further configured to available or not available.

In FIG. 5, whether or not radio resources available as cell specific signals or channels are allocated to the MT and the DU of the IAB node is indicated with "yes" and "no".

Moreover, "IAB decides" indicates that selection of the Link_parent or the Link_child depends on the decision of the IAB node. "Available" indicates a radio resource that can be selected by the IAB node based on the notification of the DU resource from the parent node (controlling unit 150) and the allocation of a cell specific signal or channel.

As explained above, when determining the radio resource to be allocated only based on H / S / NA / D / U / F, even if the parent node allocates radio resources to the DU of the parent node, there is a possibility that the IAB node does not select a link with the parent node (Link_parent) (area A in the figure). The DU resource is eventually wasted because it is not used for any operation or procedure, and there is a room for improvement from the viewpoint of the utilization efficiency of the radio resources.

In the present embodiment, the DU resource allocation that can eliminate such a state is realized. In the 3GPP, the following content has been agreed upon.

- The core network (CU 50) configures H / S / NA for the DU resource of the IAB node
- The parent node instructs availability for the soft DU resource of the IAB node
- The DU resource of the IAB node is configured to hard / soft (available), but a cell specific signal or channel is allocated to the MT, the IAB node selects whether to use the DU or the MT
- The DU resource of the IAB node is configured to NA / Soft (not available); however, one of the following operations is considered by considering that a cell specific signal or channel is allocated to the DU:
   Alt 1: Prevent NA / Soft (not available) from being configured
   Alt 2: Handled as hard
- The parent node includes a function that partly or completely comprehends the configurations (H / S / NA / D / U / F) of the DU resource of the IAB node

### (3.2) Resource allocation operation

Next, a DU resource allocation operation via which allocation of wasteful DU resource as shown in FIG. 5 can be eliminated will be explained.

### (3.2.1) Operation Example 1

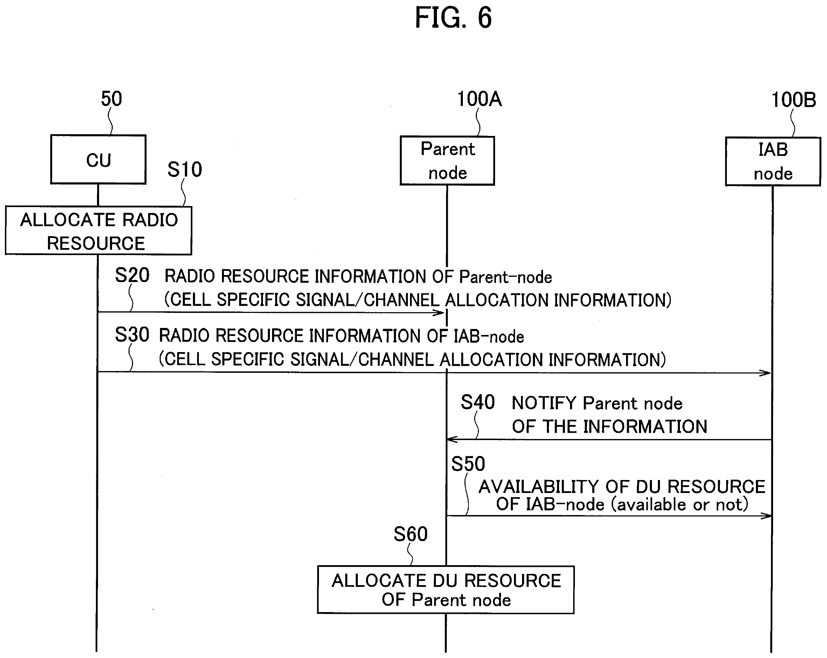

FIG. 6 is a diagram showing a sequence of processes performed to allocate the DU resources to the parent node. Specifically, FIG. 6 shows the allocation of the DU resources to the parent node that is performed when the IAB node notifies the parent node of the DU resource of the IAB node.

As shown in FIG. 6, the CU 50 notifies the IAB node and the parent node of the radio resource information of the IAB node and the configuration (H / S / NA) for the DU resource (Steps S10 to S30).

The IAB node (radio communication node 100B, hereinafter the same) notifies the parent node (radio communication node 100A) of the information (H / S / NA) on the DU resource of the IAB node that is notified from the CU 50 (Step S40) .

The IAB node notifies the parent node of the cell-specific signal or channel allocation in the IAB node and the allocation information that indicates state of the allocation (Step S30). Specifically, the IAB node notifies the parent node of the configuration information of the IAB node that includes the allocation information mentioned in points (i) to (v) explained above.

The parent node transmits to the IAB node the availability of the soft DU resource that is allocated to the IAB node (Step S50).

The parent node allocates the DU resource to the parent node based on the configuration information of the DU of the IAB node that includes the allocation information notified by the IAB node (Step S60).

At this step, because the parent node allocates the DU resource to the parent node, in other words, allocates the DU resource that considers the cell specific signal or channel in the IAB node, upon considering the allocation information notified by the IAB node, it is possible to eliminate the occurrence of a wasteful DU resource that is not used as shown in FIG. 5.

Moreover, the IAB node configures a radio link based on the received DU resource information and whether or not a cell specific signal or channel can be allocated to the MT and the DU. Specifically, the IAB node establishes communication with either the parent node that uses the MT (Link_parent) or the child node (or UE 200) that uses the DU (Link_child) (see FIGS. 2 and 5).

The configuration information can be notified to the parent node via signaling of an upper layer (such as radio resource control layer (RRC)), or can be notified via signaling of a lower layer (such as UCI (Uplink Control Information)).

Furthermore, when the configuration information of the IAB node is notified to the parent node from the IAB node at a timing earlier than that of Step S40, the parent node can perform the allocation of the DU resource that considers the allocation information notified by the IAB node, similar to Step S40.

### (3.2.2) Operation Example 2

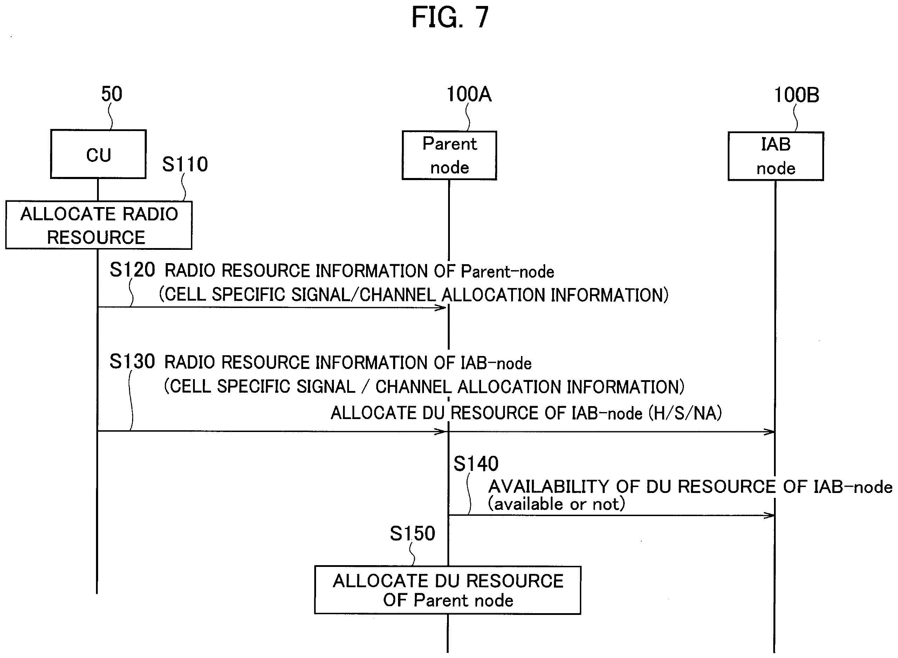

FIG. 7 is a diagram showing a sequence of processes performed to allocate the DU resources to the parent node (Operation Example 2). Specifically, FIG. 7 shows a sequence of processes performed to allocate the DU resource to the parent node when the CU 50 notifies the parent node of the DU resource of the IAB node (Operation Example 2).

In the present operation example, the parent node acquires from the CU 50 the cell specific signal or channel allocation information in the IAB node.

As shown in FIG. 7, the CU 50 notifies the IAB node and the parent node of the radio resource information of the IAB node and the configuration (H / S / NA) for the DU resource (Steps S110 to S130) . Specifically, the CU 50 determines the radio resource used by the parent node and the IAB node, and the type (H / S / NA) of the DU resource.

Moreover, the CU 50 allocates the cell specific signal and channel for the radio resource in the parent node and the IAB node.

The CU 50 notifies the parent node of the information on the allocated radio resource. Moreover, the information on the radio resource is also notified to the IAB node via the parent node.

The CU 50 notifies the parent node of the configuration information that includes the cell specific signal or channel allocation information in the IAB node.

The parent node allocates the DU resource to the parent node based on the configuration information of the IAB node that includes the allocation information notified by the CU 50 (Step S150). In the subsequent steps in the sequence, similar to Operation Example 1, the IAB node configures a radio link based on the received DU resource information and whether or not the cell specific signal or channel can be allocated to the MT and the DU.

### (4) Effects and Advantages

The following operational effects can be obtained with the embodiments explained above. Specifically, the parent node (radio communication node 100A) in the IAB acquires the configuration of the radio resource for the child node in the IAB node (radio communication node 100B), specifically, the configuration of the DU resource of the IAB node.

Therefore, the parent node can allocate a radio resource to the DU of the parent node by considering the allocation of the DU resource of the IAB node. Accordingly, the radio resource that is wasted when the IAB node does not select the allocated DU resource can be eliminated. In other words, according to the present embodiment, the parent node can realize the radio resource allocation more appropriately when the Integrated Access and Backhaul (IAB) is configured.

In the present embodiment, the parent node can acquire the configuration information that indicates the configuration of the DU resource of the IAB node from the IAB node. Alternatively, the parent node can acquire the configuration information from the core network, specifically, the CU 50.

Therefore, the parent node can acquire the configuration of the DU resource of the IAB node quickly and reliably.

In the present embodiment, as explained above, the configuration of the DU resource of the IAB node also includes the cell specific signal and channel allocation. Therefore, the parent node can allocate the DU resource to the parent node by considering the allocation information notified by the IAB node, and it is possible to eliminate the occurrence of a wasteful DU resource that is not used as shown in FIG. 5.

### (5) Other Embodiments

Although the contents of the present invention have been described by way of the embodiments, it is obvious to those skilled in the art that the present invention is not limited to what is written here and that various modifications and improvements thereof are possible.

For example, in the embodiments explained above, H / S / NA and D / U / F are being used as types of the DU resource; however, the parent node can allocate the radio resource for the DU of the parent node, in other words, can allocate the DU resource, based on only H / S / NA and the cell specific signal and channel allocation information in the IAB node.

For example, in the embodiments explained above, the names of parent node, IAB node, and child node are used; however, as long as the configuration of the radio communication node in which the radio backhaul between the radio communication nodes such as gNB and radio access with a user terminal is integrated is adopted, the names can be different. For example, the nodes can simply be called a first node, a second node, and the like, or can be called an upper node, a lower node, a relay node, an intermediate node, and the like.

Moreover, the radio communication node can be simply called as a communication device or a communication node, or can be expressed as a radio base station.

Moreover, the block diagram used for explaining the embodiments (FIGS. 3 and 4) shows blocks of functional unit. Those functional blocks (structural components) can be realized by a desired combination of at least one of hardware and software. Means for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that causes transmitting may be called a transmitting unit or a transmitter. For any of the above, as explained above, the realization method is not particularly limited to any one method.

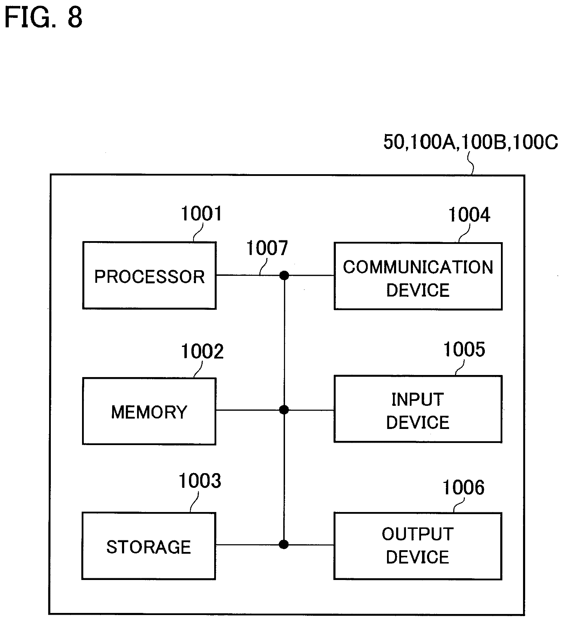

Furthermore, the CU 50 and the radio communication nodes 100A to 100C (reference device) explained above can function as a computer that performs the processing of the radio communication method of the present disclosure. FIG. 8 is a diagram showing an example of a hardware configuration of the reference device. As shown in FIG. 8, the reference device can be configured as a computer device including a processor 1001, a memory 1002, a storage 1003, a communication device 1004, an input device 1005, an output device 1006, a bus 1007, and the like.

Furthermore, in the following explanation, the term "device" can be replaced with a circuit, device, unit, and the like. Hardware configuration of the device can be constituted by including one or plurality of the devices shown in the figure, or can be constituted by without including a part of the devices.

The functional blocks of the reference device (see FIGS. 3 and 4) can be realized by any of hardware elements of the computer device or a desired combination of the hardware elements.

Moreover, the processor 1001 performs computing by loading a predetermined software (computer program) on hardware such as the processor 1001 and the memory 1002, and realizes various functions of the reference device by controlling communication via the communication device 1004, and controlling reading and / or writing of data on the memory 1002 and the storage 1003.

The processor 1001, for example, operates an operating system to control the entire computer. The processor 1001 can be configured with a central processing unit (CPU) including an interface with a peripheral device, a control device, a computing device, a register, and the like.

Moreover, the processor 1001 reads a computer program (program code), a software module, data, and the like from the storage 1003 and / or the communication device 1004 into the memory 1002, and executes various processes according to the data. As the computer program, a computer program that is capable of executing on the computer at least a part of the operation explained in the above embodiments is used. Alternatively, various processes explained above can be executed by one processor 1001 or can be executed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. The memory 1002 can be called register, cache, main memory (main memory), and the like. The memory 1002 can store therein a computer program (computer program codes), software modules, and the like that can execute the method according to the embodiment of the present disclosure.

The storage 1003 is a computer readable recording medium. Examples of the storage 1003 include an optical disk such as Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and / or the storage 1003, a server, or other appropriate medium.

The communication device 1004 is hardware (transmission / reception device) capable of performing communication between computers via a wired and / or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

In addition, the respective devices, such as the processor 1001 and the memory 1002, are connected to each other with the bus 1007 for communicating information there among. The bus 1007 can be constituted by a single bus or can be constituted by separate buses between the devices.

Further, the device is configured to include hardware such as a microprocessor, a digital signal processor (Digital Signal Processor: DSP), Application Specific Integrated Circuit (ASIC), Programmable Logic Device (PLD), and Field Programmable Gate Array (FPGA). Some or all of these functional blocks may be realized by the hardware . For example, the processor 1001 may be implemented by using at least one of these hardware.

Notification of information is not limited to that explained in the above aspect/embodiment, and may be performed by using a different method. For example, the notification of information may be performed by physical layer signaling (for example, Downlink Control Information (DCI), Uplink Control Information (UCI), upper layer signaling (for example, RRC signaling, Medium Access Control (MAC) signaling, notification information (Master Information Block (MIB), System Information Block (SIB)), other signals, or a combination of these. The RRC signaling may be called RRC message, for example, or can be RRC Connection Setup message, RRC Connection Reconfiguration message, or the like.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

As long as there is no inconsistency, the order of processing procedures, sequences, flowcharts, and the like of each of the above aspects/embodiments in the present disclosure may be exchanged. For example, the various steps and the sequence of the steps of the methods explained above are exemplary and are not limited to the specific order mentioned above.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information, signals (information and the like) can be output from an upper layer (or lower layer) to a lower layer (or upper layer). It may be input and output via a plurality of network nodes.

The input / output information can be stored in a specific location (for example, a memory) or can be managed in a management table. The information to be input / output can be overwritten, updated, or added. The information can be deleted after outputting. The inputted information can be transmitted to another device.

The determination may be made by a value (0 or 1) represented by one bit or by Boolean value (Boolean: true or false), or by comparison of numerical values (for example, comparison with a predetermined value).

Each aspect/embodiment described in the present disclosure may be used separately or in combination, or may be switched in accordance with the execution. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced by terms having the same or similar meanings. For example, at least one of a channel and a symbol may be a signal (signaling) . Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of a base station and / or a base station subsystem that performs communication service in this coverage.

In the present disclosure, the terms "mobile station (Mobile Station: MS)", "user terminal", "user equipment (User Equipment: UE)", "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The moving body may be a vehicle (for example, a car, an airplane, or the like), a moving body that moves unmanned (for example, a drone, an automatically driven vehicle, or the like), a robot (manned type or unmanned type). At least one of a base station and a mobile station can be a device that does not necessarily move during the communication operation. For example, at least one of a base station and a mobile station may be an Internet of Things (IoT) device such as a sensor.

Also, a base station in the present disclosure may be read as a mobile station (user terminal, hereinafter the same). For example, each of the aspects/embodiments of the present disclosure may be applied to a configuration that allows a communication between a base station and a mobile station to be replaced with a communication between a plurality of mobile stations (for example, may be referred to as Device-to-Device (D2D), Vehicle-to-Everything (V2X), or the like) . In this case, the mobile station may have the function of the base station. Words such as "uplink" and "downlink" may also be replaced with wording corresponding to inter-terminal communication (for example, "side"). For example, terms an uplink channel, a downlink channel, or the like may be read as a side channel.

Likewise, a mobile station in the present disclosure may be read as a base station. In this case, the base station may have the function of the mobile station.

The terms "connected", "coupled", or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using one or more wires, cables, printed electrical connections, and as some non-limiting and non-exhaustive examples, by using electromagnetic energy having wavelengths in the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on".

Any reference to an element using a designation such as "first", "second", and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive disjunction.

Throughout this disclosure, for example, during translation, if articles such as a, an, and the in English are added, in this disclosure, these articles shall include plurality of nouns following these articles.

In the present disclosure, the term "A and B are different" may mean "A and B are different from each other". It should be noted that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### EXPLANATION OF REFERENCE NUMERALS

- 10: Radio communication system
- 50: CU
- 51: NW IF unit
- 53: Allocation information transmitting unit
- 55: Resource information retaining unit
- 57: Controlling unit
- 100A, 100B, 100C: Radio communication node
- 110: Radio transmitting unit
- 120: Radio receiving unit
- 130: NW IF unit
- 140: Resource information retaining unit
- 150: Controlling unit
- 200: UE
- 1001: Processor
- 1002: Memory
- 1003: Storage
- 1004: Communication device
- 1005: Input device
- 1006: Output device
- 1007: Bus

## Claims

1. A radio communication node in which a first radio link is configured between the radio communication node and a first radio node, and a second radio link is configured between the first radio node and a second radio node, comprising:
a controlling unit that acquires configuration of a radio resource for the second radio node in the first radio node.

2. The radio communication node as claimed in claim 1, wherein the controlling unit acquires, from the first radio node, configuration information that indicates the configuration.

3. The radio communication node as claimed in claim 1, wherein the controlling unit acquires, from a core network, the configuration information that indicates the configuration.

4. The radio communication node as claimed in claim 1, wherein the configuration includes a cell specific signal or channel allocation in the first radio node.
